# EUROPEAN PATENT APPLICATION

(11) **EP 4 495 804 A2**
(43) Date of publication of application: **22.01.2025**
(21) Application number: 24194902.3
(22) Date of filing: 16.08.2024
(51) Int. Cl.: G06F 16/583, G06V 30/414, G06V 30/418

(54) **IMAGE BASED HUMAN-COMPUTER INTERACTION METHOD AND APPARATUS, DEVICE, AND STORAGE MEDIUM**

(30) Priority: 15.03.2024 CN 202410302732
(71) Applicant: Beijing Baidu Netcom Science Technology Co., Ltd., Beijing 100085 (CN)
(72) Inventor: WANG, Haiwei, Beijing, 100085 (CN); ZHANG, Zhongwen, Beijing, 100085 (CN); LI, Gang, Beijing, 100085 (CN)
(74) Representative: J A Kemp LLP

(57) **Abstract**

The present disclosure provides an image based human-computer interaction method and apparatus, a device, and a storage medium, which relates to the field of artificial intelligence and, in particular, to the field of image processing. A specific implementation solution is as follows: acquiring a to-be-analyzed image, and determining image layout information and image content information of the to-be-analyzed image, where the to-be-analyzed image includes a variety of modal data, the image layout information represents distribution of image elements with preset granularity in the to-be-analyzed image, and the image content information represents a content expressed by the modal data in the to-be-analyzed image; and determining, in response to acquiring question information, response information corresponding to the question information according to the image layout information and the image content information, where the question information represents a question proposed by a user for the to-be-analyzed image, and the response information represents a reply answer corresponding to the question information. By extracting layout information and content information from an image, the accuracy of answering a question and user experience of human-computer interaction are improved.

## Description

### TECHNICAL FIELD

The present disclosure relates to the image processing field in the field of artificial intelligence and, in particular, to an image based human-computer interaction method and apparatus, a device, and a storage medium.

### BACKGROUND

With the development of the artificial intelligence field, an automatic understanding and analysis technology for an image is gradually applied in various industries, which brings convenience to people's work. For example, a user may ask a question about an image, and automatically get an answer based on the content in the image.

However, the types of pictures in a work scenario are complex, for example, including a document screenshot, a table screenshot, a flowchart, an architecture diagram, etc. The current picture understanding technology has a low ability to understand contents of these images, which cannot meet the needs of users, and provides poor experience of human-computer interaction.

### SUMMARY

The present disclosure provides an image based human-computer interaction method and apparatus, a device, and a storage medium.

According to a first aspect of the present disclosure, an image based human-computer interaction method is provided, including:
acquiring a to-be-analyzed image, where the to-be-analyzed image includes at least two types of modal data;
determining image layout information and image content information of the to-be-analyzed image, where the image layout information represents distribution of image elements with preset granularity in the to-be-analyzed image, and the image content information represents a content expressed by the modal data in the to-be-analyzed image; and
determining, in response to acquiring question information, response information corresponding to the question information according to the image layout information and the image content information, where the question information represents a question proposed for the to-be-analyzed image; and the response information represents a reply answer corresponding to the question information.

According to a second aspect of the present disclosure, an image based human-computer interaction apparatus is provided, including:
an acquiring unit, configured to acquire a to-be-analyzed image, where the to-be-analyzed image includes at least two types of modal data;
a first determining unit, configured to determine image layout information and image content information of the to-be-analyzed image, where the image layout information represents distribution of image elements with preset granularity in the to-be-analyzed image, and the image content information represents a content expressed by the modal data in the to-be-analyzed image; and
a second determining unit, configured to determine, in response to acquiring question information, response information corresponding to the question information according to the image layout information and the image content information, where the question information represents a question proposed for the to-be-analyzed image; and the response information represents a reply answer corresponding to the question information.

According to a third aspect of the present disclosure, an electronic device is provided, including:
at least one processor; and
a memory communicatively connected to the at least one processor;
where the memory stores instructions executable by the at least one processor, and the instructions are executed by the at least one processor to cause the at least one processor to perform the method according to the first aspect.

According to a fourth aspect of the present disclosure, a non-transitory computer-readable storage medium storing computer instructions is provided, where the computer instructions are used for causing a computer to perform the method according to the first aspect.

According to a fifth aspect of the present disclosure, a computer program product including a computer program is provided, when the computer program is executed by a processor, the method according to the first aspect is implemented.

According to the technology of the present disclosure, the accuracy of understanding the image and user experience of human-computer interaction are improved.

It should be understood that the content described in this section is not intended to identify a key or important feature of the embodiments of the present disclosure, nor is it intended to limit the scope of the present disclosure. Other features of the present disclosure will become readily understood in conjunction with the following description.

### BRIEF DESCRIPTION OF THE DRAWINGS

The accompanying drawings are used for better understanding of the solutions, and do not constitute a limitation of the present disclosure.
FIG. 1 is a schematic flowchart of an image based human-computer interaction method according to an embodiment of the present disclosure.
FIG. 2 is a schematic flowchart of an image based human-computer interaction method according to an embodiment of the present disclosure.
FIG. 3 is a schematic diagram of a to-be-analyzed image according to an embodiment of the present disclosure.
FIG. 4 is a schematic flowchart of an image based human-computer interaction method according to an embodiment of the present disclosure.
FIG. 5 is a process diagram of human-computer interaction according to an embodiment of the present disclosure.
FIG. 6 is a structural block diagram of an image based human-computer interaction apparatus according to an embodiment of the present disclosure.
FIG. 7 is a structural block diagram of an image based human-computer interaction apparatus according to an embodiment of the present disclosure.
FIG. 8 is block diagram of an electronic device for implementing an image based human-computer interaction method of an embodiment of the present disclosure.
FIG. 9 is block diagram of an electronic device for implementing an image based human-computer interaction method of an embodiment of the present disclosure.

### DESCRIPTION OF EMBODIMENTS

The exemplary embodiments of the present disclosure are described below in combination with the accompanying drawings, which include various details of the embodiments of the present disclosure to facilitate understanding, and should be regarded as exemplary merely. Therefore, those of ordinary skill in the art should realize that various changes and modifications can be made on the embodiments described here without departing from the scope of the present disclosure. Similarly, for the sake of clarity and brevity, the following description omits the description of well-known functions and structures.

A user may ask a question about an image. For example, if the user wants to get content introduction of the image, the user may request to generate a note that introduces the content of the image. The current image processing technology can recognize the picture content in the image. For example, a model such as Bootstrapping Language-Image Pre-training (Bootstrapping Language-Image Pre-training, BLIP) may be used for image processing. However, at present, only a pure picture can be analyzed and understood, and the ability to understand complex types of images is low. For example, a landscape photo, a character photo, etc. can be recognized and analyzed.

Compared with common picture types in life, picture types in a work scenario are more heterogeneous and complex, including a pure picture, a document screenshot, a table screenshot, a flowchart, an architecture diagram, a data chart, etc. The existing models cannot accurately understand contents of these pictures. An obtained answer for a question of a user is prone to being wrong, and the user experience of human-computer interaction is poor.

The present disclosure provides an image based human-computer interaction method and apparatus, a device, and a storage medium, applied to the image processing field in the field of artificial intelligence, to improve the accuracy of understanding the image and the user experience.

It should be noted that the models in the embodiments are not for a specific user, and cannot reflect personal information of the specific user. It should be noted that the images in the embodiments are from a public dataset.

In the technical solutions of the present disclosure, the involved collection, storage, use, processing, transmission, provision, disclosure, etc. of a user's personal information are all in line with the provisions of relevant laws and regulations, and do not violate public order and good customs.

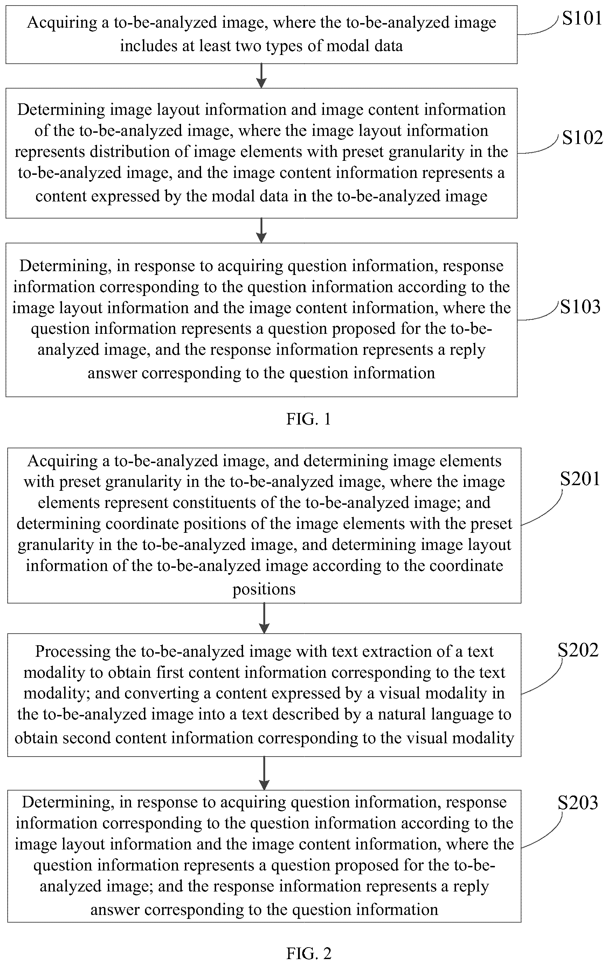

In order to make readers understand the implementation principle of the present disclosure more deeply, refined embodiments are now further described in combination with FIG. 1 to FIG. 9 below.

FIG. 1 is a schematic flowchart of an image based human-computer interaction method according to an embodiment of the present disclosure. The method may be executed by an image based human-computer interaction apparatus. As shown in FIG. 1, the method includes the following steps.

S101, acquiring a to-be-analyzed image, where the to-be-analyzed image includes at least two types of modal data.

Exemplarily, during human-computer interaction by a user, the user may ask a question about an image. For example, there are many characters in the image, and the user may ask a question about how many characters in the image; or a traffic accident is described in the image, and the user may ask a question for introduction of the content of the image. The image targeted by the user during human-computer interaction is used as the to-be-analyzed image. By understanding and analyzing the to-be-analyzed image, the user's question can be answered.

The user may input or select the to-be-analyzed image by himself/herself. For example, during human-computer interaction by the user, the user may upload the to-be-analyzed image first, and then ask a question for the to-be-analyzed image. The to-be-analyzed image may include a variety of modal data, for example, including a text modality and a visual modality. The text modality means that the to-be-analyzed image contains a text; and the visual modality means that the to-be-analyzed image contains a pattern. For example, the to-be-analyzed image is a screenshot of a web page, and the web page shows words and a landscape, then the contained words are the text modality, and the landscape is the visual modality. For another example, the to-be-analyzed image is a flowchart, the flowchart contains a plurality of flow blocks as the visual modality, and the flow blocks contain words as the text modality. In this embodiment, the to-be-analyzed image may be a variety of image categories such as a photo, a document screenshot, a table screenshot, a flowchart, an architecture diagram and a data chart.

S102, determining image layout information and image content information of the to-be-analyzed image, where the image layout information represents distribution of image elements with preset granularity in the to-be-analyzed image, and the image content information represents a content expressed by the modal data in the to-be-analyzed image.

Exemplarily, the to-be-analyzed image confirmed by the user is acquired, and then is understood and analyzed to determine the image layout information and the image content information of the to-be-analyzed image. The image layout information refers to distribution of the image elements with the preset granularity in the to-be-analyzed image; and image content information refers to a content expressed by the modal data in the to-be-analyzed image. The image elements are constituents of the to-be-analyzed image. For example, the image elements are the words in the image, and the preset granularity is a preset segmentation size of the image elements. For example, with one single word as the preset granularity, the image layout information is distribution of each single word in the to-be-analyzed image. The distribution can represent positions of the image elements with the preset granularity in the to-be-analyzed image. For example, coordinates may be used to represent the positions. That is, according to the preset granularity, the to-be-analyzed image can be segmented to obtain the image elements with the preset granularity, and the coordinates of various image elements with the preset granularity in the to-be-analyzed image can be determined, so as to obtain the image layout information of the to-be-analyzed image.

The to-be-analyzed image contains a variety of modal data. For each type of modal data, a content expressed by the modal data can be determined as content information of the modal data. That is, for the to-be-analyzed image, a plurality of pieces of content information can be obtained. For example, for the visual modality, an image content expressed by the visual modality may be captioned as a kind of content information; for the text modality, a text content of the text modality may be obtained as another kind of content information.

S103, determining, in response to acquiring question information, response information corresponding to the question information according to the image layout information and the image content information, where the question information represents a question proposed for the to-be-analyzed image; and the response information represents a reply answer corresponding to the question information.

Exemplarily, the user sends out question information for the to-be-analyzed image, and the question information represents a question proposed by the user for the to-be-analyzed image. That is, the user can ask a question for the to-be-analyzed image, and the answer for the question proposed by the user may be automatically obtained through human-computer interaction. The question information of the user is acquired, and the response information corresponding to the question information is determined according to the image layout information and the image content information, where the response information is a reply answer for the question represented by the question information.

Semantic analysis on the question information may be performed, and information corresponding to the semantics of the question information may be extracted from the image layout information and the image content information as the response information. For example, if the question information of the user is "how many single words are included in the image", a number of the single words in the image can be determined according to the image layout information; or, if the question information of the user is "what a picture in the image expresses", the content information corresponding to the visual modality may be determined as the response information. An algorithm such as semantic analysis may be preset for image processing and analysis. In this embodiment, there is no specific limitation on the preset algorithm used in image processing.

The to-be-analyzed image may be input into a preset large model, the image is processed and analyzed through the large model, and the response information is output by the large model. Image processing and analysis may also be completed by calling tools implemented in different ways such as deep learning, machine learning, and expert rules. In this embodiment, there is no specific limitation on the tools used.

In this embodiment of the present disclosure, the to-be-analyzed image may include a variety of modal data such as the text modality and the visual modality. By acquiring the to-be-analyzed image, the image layout information and the image content information of the to-be-analyzed image are determined. The image layout information can represent distribution of the image elements with the preset granularity in the to-be-analyzed image, and the image content information can represent the content expressed by the modal data in the to-be-analyzed image. By determining the image layout information and the image content information, the to-be-analyzed image can be comprehensively understood and analyzed, thereby improving the comprehensiveness of information extraction and the understanding ability. In response to the question information sent out by the user, the response information corresponding to the question information is determined according to the image layout information and the image content information. The problem in the prior art that a multi-modal complex image cannot be understood is solved, and the accuracy of question answering and the experience of human-computer interaction are improved.

FIG. 2 is a schematic flowchart of an image based human-computer interaction method according to an embodiment of the present disclosure.

In this embodiment, the determining the image layout information of the to-be-analyzed image may be refined as: determining the image elements with the preset granularity in the to-be-analyzed image, where the image elements represent constituents of the to-be-analyzed image; and determining coordinate positions of the image elements with the preset granularity in the to-be-analyzed image, and determining the image layout information of the to-be-analyzed image according to the coordinate positions.

The modal data in the to-be-analyzed image includes the text modality and the visual modality. The determining the image content information of the to-be-analyzed image may be refined as: processing the to-be-analyzed image with text extraction of the text modality to obtain first content information corresponding to the text modality; and converting the content expressed by the visual modality in the to-be-analyzed image into a text described by a natural language, to obtain second content information corresponding to the visual modality, where the image content information includes the first content information and the second content information.

As shown in FIG. 2, the method includes the following steps.

S201, acquiring a to-be-analyzed image, and determining image elements with preset granularity in the to-be-analyzed image, where the image elements represent constituents of the to-be-analyzed image; and determining coordinate positions of the image elements with the preset granularity in the to-be-analyzed image, and determining image layout information according to the coordinate positions.

Exemplarily, after the to-be-analyzed image is acquired, the image layout information and the image content information of the to-be-analyzed image can be determined. In this embodiment, there is no specific limitation on an order of determining the image layout information and determining the image content information. The granularity of the image elements is preset to segment the image elements. In determining the image layout information, the image elements with the preset granularity are determined from the to-be-analyzed image, and a plurality of image elements with the preset granularity can be determined. For example, the preset granularity is the granularity of one single word, and there are ten single words in the to-be-analyzed image, then ten image elements with the preset granularity can be determined.

Coordinate positions of various image elements with the preset granularity in the to-be-analyzed image are determined; the image layout information of the to-be-analyzed image is determined according to the coordinate positions of the image elements with the preset granularity in the to-be-analyzed image. The coordinate positions may be determined as the image layout information. Or, contents expressed by various image elements with the preset granularity may be determined, and the contents are associated with the corresponding coordinate positions as the image layout information. For example, an image element with the preset granularity is a single word, and the single word and the coordinate position where the single word is located are associated and stored to obtain the image layout information. Or, an image element with the preset granularity is a tree, and information of the tree, such as a size and a color, and the coordinate position of the tree are associated and stored to obtain the image layout information.

In this embodiment, the granularity of the image elements is preset, and a coordinate position of each image element is determined as the image layout information, so as to decompose the to-be-analyzed image by the preset granularity, thereby improving the comprehensiveness of information extraction, and then improving the ability of understanding the image.

In this embodiment, the determining image elements with the preset granularity in the to-be-analyzed image includes: processing the to-be-analyzed image with image recognition according to the preset granularity, to obtain the image elements with the preset granularity in the to-be-analyzed image.

Specifically, the granularity of the image elements is preset, and according to the preset granularity, image recognition is performed on the to-be-analyzed image to recognize all the image elements with the preset granularity in the to-be-analyzed image. For example, if the preset granularity is one single word, then each single word in the to-be-analyzed image can be recognized, where each single word is one image element with the preset granularity. This embodiment does not specifically limit the preset granularity of the image elements, but it is necessary to ensure that the image elements of the preset granularity contain semantics. For example, a letter cannot be used as the preset granularity.

A layout recognition algorithm may be preset, and may be used for recognizing the image elements with the preset granularity in the to-be-analyzed image. After all the image elements with the preset granularity in the to-be-analyzed image are determined, semantic recognition may be further performed on the image elements with the preset granularity to obtain semantics of the image elements with the preset granularity. In this embodiment, there is no specific limitation on the preset layout recognition algorithm.

Such setting has the beneficial effects that: based on the preset technology such as the layout recognition, constituents of fine-granularity elements in the to-be-analyzed image are recognized to obtain a plurality of image elements with the preset granularity, which is conductive to subsequently obtaining image layout information of the image, thereby improving the efficiency and the accuracy of information extraction.

In this embodiment, the determining the coordinate positions of the image elements with the preset granularity in the to-be-analyzed image includes: processing the to-be-analyzed image with image segmentation according to the image elements with the preset granularity, to obtain a plurality of image blocks, where one image block represents one image element with the preset granularity; and determining coordinate positions of the image blocks in the to-be-analyzed image.

Specifically, after the image elements with the preset granularity are obtained, the to-be-analyzed image is processed with image segmentation according to the image elements with the preset granularity, to segment the to-be-analyzed image into a plurality of image blocks. One image block can represent one image element with the preset granularity. For example, the image elements with the preset granularity may be segmented in a form of a rectangular block.

A coordinate position of each image block in the to-be-analyzed image is determined; and the image layout information of the to-be-analyzed image is determined according to the coordinate position of the image block. The coordinate positions may be determined as the image layout information; or the image elements in the image blocks and the corresponding coordinate positions may be jointly used as the image layout information of the to-be-analyzed image. For example, an image element in an image block is one single word, and then the single word and the coordinate position of the image block are associated and stored as the image layout information. If semantic information of the image element in the image block is determined, then the semantic information and the corresponding coordinate position may be associated and stored as the image layout information.

Such setting has the beneficial effects that: for each image block, the content in the image block and the coordinate position of the image block are determined as the image layout information, which associates the position with the content for the image element with the preset granularity, thereby avoiding confusion between the position and the content at this position, and improving the accuracy of the image layout information.

S202, processing the to-be-analyzed image with text extraction of the text modality to obtain first content information corresponding to the text modality; and converting the content expressed by the visual modality in the to-be-analyzed image into a text described by a natural language, to obtain second content information corresponding to the visual modality.

Exemplarily, the to-be-analyzed image may include modal data, for example, including the text modality and the visual modality. After the multi-modal to-be-analyzed image is acquired, the content information corresponding to various modalities can be obtained from the to-be-analyzed image. For the text modality, the to-be-analyzed image may be processed with text extraction of the text modality, that is, text information is extracted from the to-be-analyzed image to obtain the first content information. The first content information is the text information in the to-be-analyzed image. A text recognition algorithm may be preset for text extraction, for example, an optical character recognition (OCR) algorithm may be used. In this embodiment, there is no specific limitation on the preset text recognition algorithm.

For the visual modality, the picture content may be acquired from the to-be-analyzed image as the content expressed by the visual modality. For example, a background picture of the text may be acquired, and all patterns other than the text in the to-be-analyzed image may be acquired. The content expressed by the visual modality in the to-be-analyzed image is converted into the text described by the natural language. The text described by the natural language can be used for introducing the content expressed by the visual modality. The text described by the natural language is determined as the second content information, that is, the visual content of the to-be-analyzed image is converted into a caption (explanation). An image captioning algorithm may be preset, and the second content information can be obtained according to the image captioning algorithm. In this embodiment, there is no specific limitation on the preset image captioning algorithm.

In this embodiment, based on technologies such as text recognition and image-text conversion recognition, the content information corresponding to various modalities is extracted from the to-be-analyzed image, so as to comprehensively extract information from the to-be-analyzed image, thereby avoiding information omission, improving the accuracy of understanding the image, and then improving the experience of human-computer interaction.

S203, determining, in response to question information sent out by the user, response information corresponding to the question information according to the image layout information and the image content information, where the question information represents a question proposed by the user for the to-be-analyzed image; and the response information represents a reply answer for the question represented by the question information.

Exemplarily, this step can be referred to step S 102, and is not described herein again.

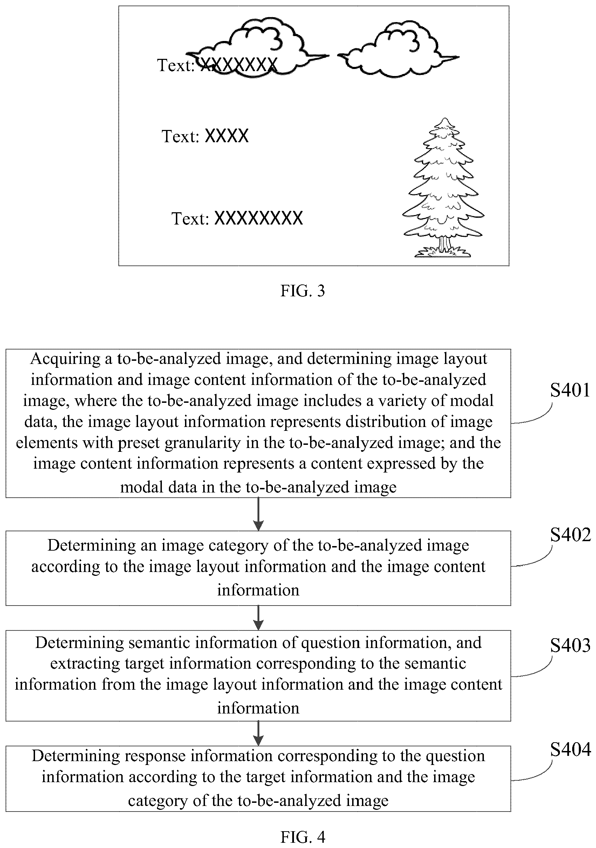

FIG. 3 is a schematic diagram of a to-be-analyzed image. In the to-be-analyzed image in FIG. 3, there are three lines of texts on the left side, trees on the right side, and clouds in the background. That is, the to-be-analyzed image contains two types of modal data i.e. the text modality and the visual modality. The text on the left side is the text modality, and the trees on the right side and the clouds in the background are the visual modality.

In this embodiment of the present disclosure, the to-be-analyzed image may include a variety of modal data such as the text modality and the visual modality. By acquiring the to-be-analyzed image, the image layout information and the image content information of the to-be-analyzed image are determined. The image layout information can represent distribution of the image elements with the preset granularity in the to-be-analyzed image, and the image content information can represent the content expressed by the modal data in the to-be-analyzed image. By determining the image layout information and the image content information, the to-be-analyzed image can be comprehensively understood and analyzed, thereby improving the comprehensiveness of information extraction and the understanding ability. In respond to the question information sent out by the user, the response information corresponding to the question information is determined according to the layout information and the content information. The problem in the prior art that a multi-modal complex image cannot be understood is solved, and the accuracy of question answering and the experience of human-computer interaction are improved.

FIG. 4 is a schematic flowchart of an image based human-computer interaction method according to an embodiment of the present disclosure.

In this embodiment, the determining response information corresponding to the question information according to the image layout information and the image content information may be refined as: determining an image category of the to-be-analyzed image according to the image layout information and the image content information; determining semantic information of the question information, and extracting target information corresponding to the semantic information from the image layout information and the image content information; and determining the response information corresponding to the question information according to the target information and the image category of the to-be-analyzed image.

As shown in FIG. 4, the method includes the following steps.

S401, acquiring a to-be-analyzed image, and determining image layout information and image content information of the to-be-analyzed image, where the to-be-analyzed image includes a variety of modal data; the image layout information represents distribution of image elements with preset granularity in the to-be-analyzed image; and the image content information represents a content expressed by the modal data in the to-be-analyzed image.

Exemplarily, this step can be referred to step S101, and is not described herein again.

S402, determining the image category of the to-be-analyzed image according to the image layout information and the image content information.

Exemplarily, after the image layout information and the image content information are acquired, the image category of the to-be-analyzed image can be determined according to the image layout information and the image content information. The image category may be a document screenshot, a table screenshot, a flowchart, an architecture diagram, or a data chart, etc.

A rule for determining the image category may be preset. For example, according to the image layout information, it can be determined that in the to-be-analyzed image, the image elements with the preset granularity are arranged in a form of multiple rows and multiple columns, and then it can be determined that the image category of the to-be-analyzed image is the table screenshot. For another example, according to the image layout information, it is determined that the to-be-analyzed image includes a large amount of text information, and then according to the image content information, it is determined that a meaning expressed by the text information is an article, and then it is determined that the image category of the to-be-analyzed image is the document screenshot. In this embodiment, there is no specific limitation on the rule for determining the image category.

In this embodiment, the method further includes: determining similarities between two of the image layout information, and first content information and second content information in the to-be-analyzed image; and determining the image category of the to-be-analyzed image according to the image layout information and the image content information if the similarities are all equal to or larger than a present similarity threshold.

Specifically, the image content information of the to-be-analyzed image may include the first content information and the second content information. For the three kinds of information, i.e. the layout information, the first content information, and the second content information, the similarities between two of them are determined. That is, the similarity between the image layout information and the first content information, the similarity between the layout information and the second content information, and the similarity between the first content information and the second content information may be determined. These three kinds of information may be divided into two groups, and each group contains two kinds of information, then only two similarities needs to be determined. For example, the similarity between the image layout information and the first content information and the similarity between the image layout information and the second content information may be determined. In this embodiment, there is no specific limitation on the calculation method of the similarity.

The similarity threshold is preset, and each similarity obtained is compared with the similarity threshold. If the plurality of similarities obtained are all equal to or larger than the preset similarity threshold, it is considered that the image layout information is consistent with the image content information, the image layout information and the image content information are correct information, and the image category of the to-be-analyzed image can be determined according to the image layout information and the image content information.

Such setting has the beneficial effects that: by determining the similarities, the accuracy of the image layout information and the image content information can be judged, so as to determine a category subsequently, thereby improving the accuracy of determining the image category, and then improving the accuracy of question answering.

In this embodiment, the method further includes: determining, in response to the similarities being smaller than the preset similarity threshold, standard information from the image layout information, the first content information and the second content information, where the standard information is used for adjusting the image layout information and/or the image content information; determining the adjusted image layout information and image content information according to the standard information; and determining the image category of the to-be-analyzed image according to the adjusted image layout information and image content information.

Specifically, if one or more similarities are smaller than the preset similarity threshold, it is considered that there is wrong information in the image layout information, the first content information and the second content information, and it is necessary to adjust the wrong information.

The standard information may be determined first from the image layout information, the first content information and the second content information. The standard information is correct information, and can be used for adjusting the image layout information and/or the image content information, that is, adjusting the wrong information. For example, if the standard information is the image layout information, and the first content information and the second content information are the wrong information, then the first content information and the second content information can be adjusted by the image layout information.

The standard information may be preset from the image layout information and the image content information, for example, the second content information may be preset as the standard information. A rule for determining the standard information may also be preset. The standard information may be determined according to the similarities between two kinds of information. The two kinds of information with the highest similarity may be determined, and one of the two kinds of information is determined as the standard information. For example, the image layout information is information A, the first content information is information B, and the second content information is information C. If the similarity between A and B is higher, and the similarity between A and C is lower, it may be determined that either A or B can be the standard information, and the information C is adjusted according to the standard information. In this embodiment, there is no specific limitation on the rule for determining the standard information.

After the standard information is determined, adjusted image layout information and image content information are determined according to the standard information. If the standard information is the image layout information, the image content information is adjusted; if the standard information is the first content information, the image layout information and the second content information are adjusted; and if the standard information is the second content information, the image layout information and the first content information are adjusted. An adjustment method of the information may be preset. During information adjustment, the standard information may be replaced into the wrong information. For example, the standard information is the image layout information, the information needed to be adjusted is the second content information, the image layout information indicates that the to-be-analyzed image is a tabular image, and the second content information indicates that the to-be-analyzed image is a flowchart, then the flowchart in the second content information may be changed into the tabular image. After adjustment is completed, correct image layout information and image content information are obtained.

The image category of the to-be-analyzed image is determined according to the adjusted image layout information and image content information. An image classification model may be preset. The adjusted image layout information and image content information are input into the image classification model. After comprehensive judgment by the model, the image category of the to-be-analyzed image is obtained. For example, the image category may be a pure image, a table, a document, a flowchart, etc. The image classification model may be a pre-trained neural network model. In this embodiment, there is no specific limitation on a structure of the image classification model.

Such setting has the beneficial effects that: if there is a smaller similarity between the information, the information may be corrected to improve the accuracy of the information. Then the image category is determined, so as to improve the accuracy of the image category.

In this embodiment, the determining the image category of the to-be-analyzed image according to the image layout information and the image content information includes: determining a position arrangement rule of the image elements with the preset granularity in the to-be-analyzed image according to the image layout information, where the position arrangement rule represents an arrangement rule of coordinate positions of the image elements with the preset granularity in the to-be-analyzed image; determining the image category of the to-be-analyzed image as a first image category according to the position arrangement rule; determining the image category of the to-be-analyzed image as a second image category according to the second content information in the to-be-analyzed image; and obtaining the image category of the to-be-analyzed image in response to the first image category being consistent with the second image category.

Specifically, the image layout information includes the coordinate positions of the image elements with the preset granularity in the to-be-analyzed image. According to the coordinate positions of the image elements with the preset granularity in the to-be-analyzed image, the position arrangement rule of the image elements with the preset granularity in the to-be-analyzed image can be determined. The position arrangement rule can represent the arrangement rule of the coordinate positions of the image elements with the preset granularity in the to-be-analyzed image. For example, the to-be-analyzed image is a tabular image, and the preset granularity is a size of a field in a table. According to the coordinate positions of the image elements with the preset granularity in the to-be-analyzed image, it can be determined that the image elements with the preset granularity show a position arrangement rule of multiple rows and multiple columns in the to-be-analyzed image.

According to the position arrangement rule, the image category of the to-be-analyzed image can be determined, and the image category determined according to the position arrangement rule is taken as the first image category, that is, the image category determined according to the image layout information is the first image category. For example, the image elements with the preset granularity may show the position arrangement rule of multiple rows and multiple columns in the to-be-analyzed image, and then the first image category is the tabular category. According to the second content information in the to-be-analyzed image, the image category of the to-be-analyzed image may also be determined, and the image category determined according to the second content information is taken as the second image category. The second content information refers to a caption of the image content, and the second image category may be read directly from the second content information. For example, if it is written in the second content information that the to-be-analyzed image is a flowchart, the second image category is a flowchart category.

If the first image category is consistent with the second image category, the image category of the to-be-analyzed image can be obtained directly. That is, the first image category or the second image category is determined as the image category of the to-be-analyzed image. If the image layout information or the image content information is adjusted, the first image category and the second image category can be determined respectively according to the adjusted image layout information and the image content information, so as to obtain the image category of the to-be-analyzed image.

Such setting has the beneficial effects that: by comprehensively considering the image layout information and the image content information, an error on category determination caused by single information is avoided, which improves the accuracy of determining the category, thereby improving the accuracy of question answering and the experience of human-computer interaction.

In this embodiment, the method further includes: determining, in response to inconsistency between the first image category and the second image category, a target category from the first image category and the second image category according to a preset priority, as the image category of the to-be-analyzed image.

Specifically, if the first image category is inconsistent with the second image category, the first image category or the second image category cannot be directly determined as the image category of the to-be-analyzed image. It is necessary to determine one image category from the first image category and the second image category as the target category, and then the target category is determined as the image category of the to-be-analyzed image.

The priority between the image layout information and the image content information may be preset. According to the preset priority, the information with the highest priority is determined, and the image category determined by the information with the highest priority is determined as the target category. For example, the second content information has the highest priority, and then the second image category may be determined as the target category, so as to obtain the image category of the to-be-analyzed image.

Such setting has the beneficial effects that: if the two image categories are inconsistent, a more reliable information category is selected as the image category of the to-be-analyzed image, so as to improve the accuracy of determining the image category.

S403, determining semantic information of the question information, and extracting target information corresponding to the semantic information from the image layout information and the image content information.

Exemplarily, the question information sent out by the user is acquired, and semantics of the question information is recognized to obtain the semantic information of the question information, that is, the semantic information represents the semantics of the question information. One semantic recognition model may be preset to determine the semantic information of the question information. In this embodiment, there is no specific limitation on the preset semantic recognition model.

The target information is screened from the image layout information and the image content information. According to the semantic information, corresponding information may be found from the image layout information and the image content information as the target information. That is, the target information consistent with the semantic information is found from the image layout information and the image content information. For example, semantic recognition may be performed on the image layout information and the image content information to find information corresponding to the semantics consistent with the semantic information from the image layout information, and to find information corresponding to the semantics consistent with the semantic information from the image content information.

S404, determining the response information corresponding to the question information according to the target information and the image category of the to-be-analyzed image.

Exemplarily, after the image category and the target information are obtained, the question information may be answered according to the target information and the image category of the to-be-analyzed image, to obtain the response information corresponding to the question information. For example, the image category and the target information may be determined as the response information, or the image category and the target information may be combined to obtain the response information. The response information may be obtained based on a preset tool. For example, the preset tool may be a tool for generating a chart or creating a to-do list, etc.

In this embodiment, the determining the response information according to the target information and the image category of the to-be-analyzed image includes: determining an information format corresponding to the image category of the to-be-analyzed image according to a preset association relationship between the image category and the information format; and generating the response information corresponding to the question information according to the target information, based on the information format corresponding to the image category of the to-be-analyzed image.

Specifically, the association relationship between the image category and the information format is preset. For different image categories, there may be different formats of response information. According to the image category of the to-be-analyzed image and the preset association relationship between the image category and the information format, the information format corresponding to the image category of the to-be-analyzed image is determined as a target format.

After the target information is obtained, the format of the target information is adjusted according to the target format, and the adjusted information is the response information. That is, the content expressed by the response information is the content expressed by the target information, and the format of the response information is the information format corresponding to the image category of the to-be-analyzed image. For example, the target information may be adjusted into a tabular form, and a generated table is displayed to the user as the response information.

Such setting has the beneficial effects that: for different image categories, different formats of response information can be obtained, which is conductive to the user in understanding the response information, thereby improving the user experience.

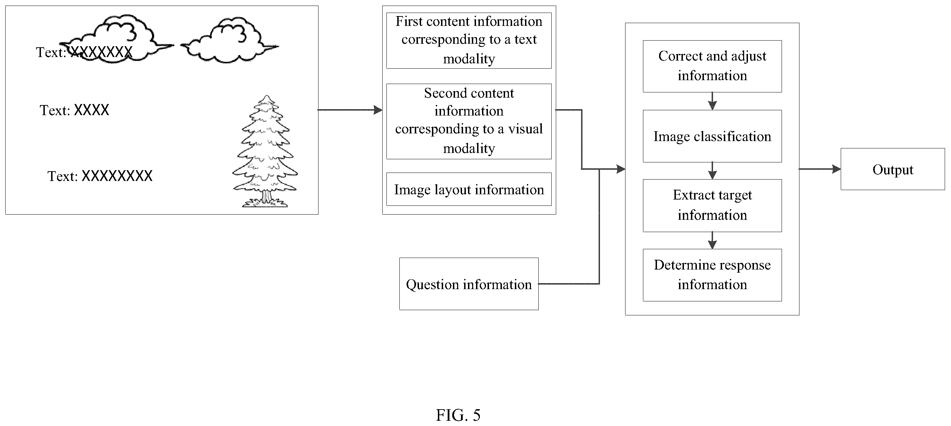

FIG. 5 is a process diagram of human-computer interaction according to this embodiment. In FIG. 5, the user inputs a to-be-analyzed image and question information. The to-be-analyzed image is an image with multi-modal data, and the question information may be used for requesting content extraction, picture answering, picture questioning and answering, chart answering, copywriting, etc. on the to-be-analyzed image. The to-be-analyzed image is observed and analyzed to obtain first content information, second content information and image layout information. These obtained layout information and content information, as well as question information, are input into a preset large model. The large model performs reasoning of a Chain of Thought (CoT) mode, and uses a preset tool to output the response information. The Chain of Thought mode refers to a process of decomposing a complex question into step-by-step sub-questions through gradual participation of the large model, and solving them in sequence. In this embodiment, the reasoning process of the Chain of Thought is to correct and adjust information first, then determine an image category, then extract target information, and finally combine question information indicated by the user to obtain the response information.

In this embodiment of the present disclosure, the to-be-analyzed image may include a variety of modal data such as a text modality and a visual modality. By acquiring the to-be-analyzed image, the image layout information and the image content information of the to-be-analyzed image are determined. The image layout information can represent distribution of image elements with preset granularity in the to-be-analyzed image, and the image content information can represent a content expressed by the modal data in the to-be-analyzed image. By determining the image layout information and the image content information, the to-be-analyzed image can be comprehensively understood and analyzed, thereby improving the comprehensiveness of information extraction and the understanding ability. In response to the question information sent out by the user, the response information corresponding to the question information is determined according to the image layout information and the image content information. The problem in the prior art that a multi-modal complex image cannot be understood is solved, and the accuracy of question answering and the experience of human-computer interaction are improved.

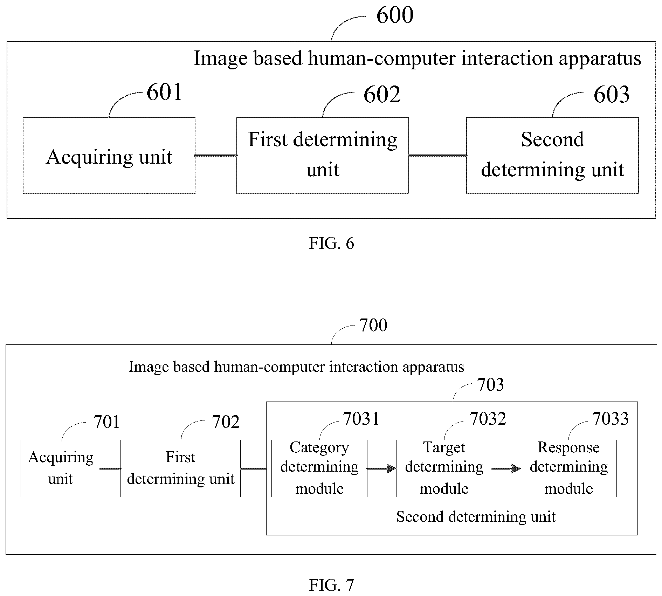

FIG. 6 is a structural block diagram of an image based human-computer interaction apparatus according to an embodiment of the present disclosure. For convenience in description, only the parts related to the embodiments of the present disclosure are shown. Referring to FIG. 6, the image based human-computer interaction apparatus 600 includes: an acquiring unit 601, a first determining unit 602 and a second determining unit 603.

The acquiring unit 601 is configured to acquire a to-be-analyzed image, where the to-be-analyzed image includes at least two types of modal data.

The first determining unit 602 is configured to determine image layout information and image content information of the to-be-analyzed image, where the image layout information represents distribution of image elements with preset granularity in the to-be-analyzed image; and the image content information represents a content expressed by the modal data in the to-be-analyzed image.

The second determining unit 603 is configured to determine, in response to acquiring question information, response information corresponding to the question information according to the image layout information and the image content information, where the question information represents a question proposed for the to-be-analyzed image; and the response information represents a reply answer corresponding to the question information.

FIG. 7 is a structural block diagram of an image based human-computer interaction apparatus according to an embodiment of the present disclosure. as shown in FIG. 7, the image based human-computer interaction apparatus 700 includes: an acquiring unit 701, a first determining unit 702 and a second determining unit 703, where the second determining unit 703 includes a category determining module 7031, a target determining module 7032 and a response determining module 7033.

The category determining module 7031 is configured to determine an image category of the to-be-analyzed image according to the image layout information and the image content information.

The target determining module 7032 is configured to determine semantic information of the question information, and extract target information corresponding to the semantic information from the image layout information and the image content information.

The response determining module 7033 is configured to determine the response information corresponding to the question information according to the target information and the image category of the to-be-analyzed image.

In an example, the first determining unit 702 includes:
an element determining module, configured to determine image elements with preset granularity in the to-be-analyzed image, where the image elements represent constituents of the to-be-analyzed image;
a coordinate determining module, configured to determine coordinate positions of the image elements with the preset granularity in the to-be-analyzed image; and
a layout determining module, configured to determine the image layout information according to the coordinate positions.

In an example, the element determining module includes:
an element recognition submodule, configured to process the to-be-analyzed image with image recognition according to the preset granularity, to obtain the image elements with the preset granularity in the to-be-analyzed image.

In an example, the coordinate determining module includes:
an image segmentation submodule, configured to process the to-be-analyzed image with image segmentation according to the image elements with the preset granularity to obtain a plurality of image blocks, where one image block represents one image element with the preset granularity; and
a position determining submodule, configured to determine coordinate positions of the image blocks in the to-be-analyzed image.

In an example, the at least two types of modal data include a text modality and a visual modality. The first determining unit 702 includes:
a text extracting module, configured to process the to-be-analyzed image with text extraction of the text modality to obtain first content information corresponding to the text modality; and
a visual conversion module, configured to convert a content expressed by the visual modality in the to-be-analyzed image into a text described by a natural language, to obtain second content information corresponding to the visual modality.

In an example, the response determining module 7033 includes:
a format determining submodule, configured to determine an information format corresponding to the image category of the to-be-analyzed image according to a preset association relationship between the image category and the information format; and
an information generating submodule, configured to generate the response information corresponding to the question information according to the target information, based on the information format corresponding to the image category of the to-be-analyzed image.

In an example, the category determining module includes:
a similarity determining submodule, configured to determine similarities between two of the image layout information, and the first content information and the second content information in the to-be-analyzed image; and
a similarity judging submodule, configured to determine, in response to the similarities all being equal to or larger than a preset similarity threshold, the image category of the to-be-analyzed image according to the image layout information and the image content information.

In an example, the apparatus further includes:
a standard determining submodule, configured to determine, in response to the similarities being smaller than the preset similarity threshold, standard information from the image layout information, the first content information and the second content information, where the standard information is used for adjusting the image layout information and/or the image content information; and
an information adjusting submodule, configured to determine adjusted image layout information and image content information according to the standard information, and determine the image category of the to-be-analyzed image according to the adjusted image layout information and image content information.

In an example, the category determining module 7031 includes:
a rule determining submodule, configured to determine a position arrangement rule of the image elements with the preset granularity in the to-be-analyzed image according to the image layout information, where the position arrangement rule represents an arrangement rule of the coordinate positions of the image elements with the preset granularity in the to-be-analyzed image;
a first determining submodule, configured to determine the image category of the to-be-analyzed image as a first image category according to the position arrangement rule;
a second determining submodule, configured to determine the image category of the to-be-analyzed image as a second image category according to the second content information; and
a category determining submodule, configured to obtain the image category of the to-be-analyzed image in response to the first image category being consistent with the second image category.

In an example, the apparatus further includes:
a target category determining unit, configured to determine, in response to inconsistency between the first image category and the second image category, a target category from the first image category and the second image category according to a preset priority, as the image category of the to-be-analyzed image.

According to an embodiment of the present disclosure, the present disclosure further provides an electronic device.

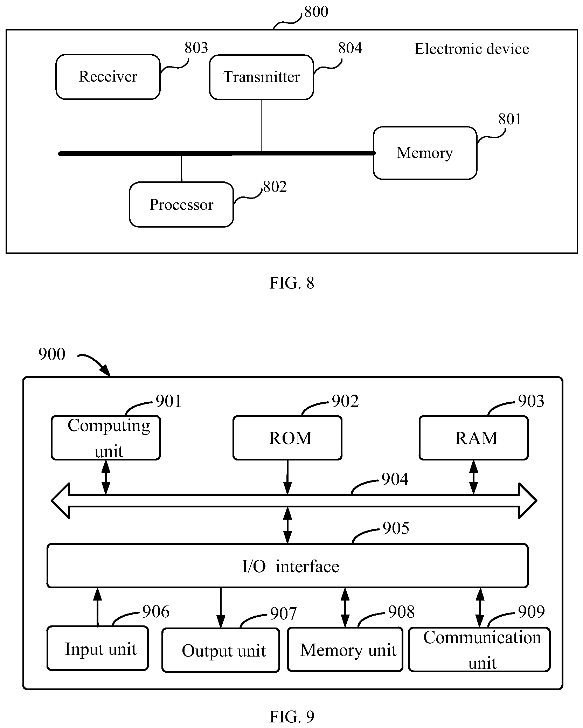

FIG. 8 is a structural block diagram of an electronic device according to an embodiment of the present disclosure. The electronic device may be a terminal device or a server. As shown in FIG. 8, the electronic device 800 includes: at least one processor 802, and a memory 801 communicatively connected to the at least one processor 802, where the memory stores instructions executable by the at least one processor 802; and the instructions are executed by the at least one processor 802 to cause the at least one processor 802 to perform the image based human-computer interaction method of the present disclosure.

The electronic device 800 further includes a receiver 803 and a transmitter 804. The receiver 803 is configured to receive instructions and data transmitted by other devices; and the transmitter 804 is configured to transmit the instructions and data to an external device.

According to an embodiment of the present disclosure, the present disclosure further provides a non-transitory computer-readable storage medium storing computer instructions, where the computer instructions are used for causing a computer to implement the solution provided by any one of the above embodiments.

According to an embodiment of the present disclosure, the present disclosure further provides a computer program product. The computer program product includes: a computer program stored in the readable storage medium. At least one processor of the electronic device can read the computer program from the readable storage medium, and the at least one processor executes the computer program to cause the electronic device to implement the solution provided by any one of the above embodiments.

FIG. 9 is a schematic block diagram of an exemplary electronic device 900 used for implementing embodiments of the present disclosure. The electronic device is intended to represent various forms of digital computers such as a laptop, a desktop, a workbench, a personal digital assistant, a server, a blade server, a large computer, and other suitable computers. The electronic device may further represent various forms of mobile devices such as a personal digital assistant, a cellular phone, a smart phone, a wearable device and other similar computing devices. The components shown herein, connections and relationships between the components and functions of the components are only exemplary, and are not intended to limit implementation of the present disclosure described and/or claimed herein.

As shown in FIG. 9, the device 900 includes a computing unit 901 capable of executing various suitable actions and processing according to a computer program stored in a read-only memory (ROM) 902 or a computer program loaded from a memory unit 908 into a random access memory (RAM) 903. Various programs and data required for operations of the device 900 may also be stored in the RAM 903. The computing unit 901, the ROM 902 and the RAM 903 are connected with each other via a bus 904. An input/output (I/O) interface 905 is also connected to the bus 904.

A plurality of components in the device 900 are connected to the I/O interface 905, including: an input unit 906, for example, a keyboard, a mouse, etc.; an output unit 907, for example, various types of displays, speakers, etc.; the memory unit 908, for example, a disk, an optical disk, etc.; and a communication unit 909, for example, a network card, a modem, a wireless communication transceiver, etc. The communication unit 909 allows the device 900 to exchange information/data with other devices via a computer network such as the Internet and/or various telecommunication networks.

The computing unit 901 may be various general and/or dedicated processing assemblies with processing and computing capabilities. Some examples of the computing unit 901 include, but are not limited to, a central processing unit (CPU), a graphics processing unit (GPU), various dedicated artificial intelligence (AI) computing chips, various computing units for running machine learning model algorithms, a digital signal processor (DSP), and any suitable processor, controller, microcontroller, etc. The computing unit 901 performs various methods and processing described above, for example, the image based human-computer interaction method. For example, in some embodiments, the image based human-computer interaction method may be implemented as a computer software program that is physically contained in a machine-readable medium, for example, the memory unit 908. In some embodiments, part or all of the computer programs can be loaded and/or installed on the device 900 via the ROM 902 and/or the communication unit 909. When the computer program is loaded into the RAM 903 and executed by the computing unit 901, one or more steps of the image based human-computer interaction method described above can be performed. Alternatively, in other embodiments, the computing unit 901 may be configured to perform the image based human-computer interaction method in any other suitable ways (for example, by virtue of firmware).

The various implementations of the systems and technologies described above herein may be implemented in a digital electronic circuit system, an integrated circuit system, a field programmable gate array (FPGA), an application specific integrated circuit (ASIC), an application specific standard product (ASSP), a system on chip (SOC), a complex programmable logic device (CPLD), computer hardware, firmware, software, and/or a combination thereof. These implementations may include: implementation in one or more computer programs, which may be executed and/or interpreted on a programmable system including at least one programmable processor. The programmable processor may be a dedicated or general programmable processor, which can receive data and instructions from a memory system, at least one input apparatus and at least one output apparatus, and transmit data and instructions to the memory system, the at least one input apparatus and the at least one output apparatus.

Program codes used for implementing the method of the present disclosure may be written in any combination of one or more programming languages. These program codes may be provided to a processor or a controller of a general computer, a dedicated computer or other programmable data processing apparatuses, so that functions/operations specified in the flowchart and/or the block diagram are implemented when the program codes are executed by the processor or the controller. The program codes may be executed completely on a machine, partially on the machine, partially on the machine and partially on a remote machine as separate packages, or completely on the remote machine or server.

In the context of the present disclosure, the machine readable medium may be a tangible medium that may contain or store a program for use by, or in conjunction with, an instruction execution system, apparatus or device. The machine readable medium may be a machine readable signal medium or a machine readable storage medium. The machine readable medium may include, but is not limited to, an electronic, magnetic, optical, electromagnetic, infrared, or semiconductor system, apparatus or device, or any suitable combination of the above. More specific examples of the machine readable storage medium may include an electrical connection based on one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above.

In order to provide interaction with a user, the systems and the technologies described here may be implemented on a computer, which has: a display apparatus for displaying information to the user (for example, a cathode ray tube (CRT) or a liquid crystal display (LCD) monitor); and a keyboard and a pointing apparatus (for example, a mouse or a trackball) through which the user can provide input to the computer. Other types of apparatuses may be used for providing interaction with the user, for example, a feedback provided to the user may be any form of sensory feedbacks (for example, a visual feedback, an auditory feedback, or a tactile feedback); and any form (including sound input, voice input, or tactile input) may be used for receiving input from the user.

The systems and technologies described here may be implemented in a computing system that includes background components (for example, as a data server), or a computing system that includes middleware components (for example, an application server), or a computing system that includes front-end components (for example, a user computer with a graphical user interface or a web browser, through which the user can interact with the implementation of the systems and technologies described here), or a computing system that includes any combination of such back-end components, middleware components, or front-end components. The components of the system may be connected with each other through digital data communication (for example, a communication network) in any form or medium. Examples of the communication network include: a local area network (LAN), a wide area network (WAN), and the Internet.

The computer system may include a client and a server. The client and the server are generally far away from each other, and usually perform interaction through the communication network. A client-server relationship is generated by computer programs that run on the corresponding computer and have a client-server relationship with each other. The server may be a cloud server, also called a cloud computing server or a cloud host, which is a host product in the cloud computing service system to solve the defects of great difficulty in management and weak business scalability of a traditional physical host and VPS server (virtual private server, or "VPS" for short). The server may also be a server for a distributed system, or a server combined with a blockchain.

It should be understood that the various forms of processes shown above may be used to reorder, add or delete the steps. For example, various steps recorded in the present disclosure may be executed in parallel or in sequence or in different orders, which will not be limited herein as long as the expected results of the technical solution disclosed in the present disclosure can be achieved.

The above specific implementations do not limit the scope of protection of the present disclosure. Those skilled in the art should understand that according to design requirements and other factors, various modifications, combinations, sub-combinations and substitutions can be made. Any modifications, equivalent substitutions, improvements and the like within the principle of the present disclosure should be included within the scope of protection of the present disclosure.

## Claims

1. An image based human-computer interaction method, comprising:
acquiring (S101) a to-be-analyzed image, wherein the to-be-analyzed image comprises at least two types of modal data;
determining (S102, S401) image layout information and image content information of the to-be-analyzed image, wherein the image layout information represents distribution of image elements with preset granularity in the to-be-analyzed image, and the image content information represents a content expressed by the modal data in the to-be-analyzed image; and
determining (S103, S203), in response to acquiring question information, response information corresponding to the question information according to the image layout information and the image content information, wherein the question information represents a question proposed for the to-be-analyzed image, and the response information represents a reply answer corresponding to the question information.

2. The method according to claim 1, wherein the determining (S102) the image layout information and the image content information of the to-be-analyzed image comprises:
determining (S201) the image elements with the preset granularity in the to-be-analyzed image, wherein the image elements represent constituents of the to-be-analyzed image;
determining (S201) coordinate positions of the image elements with the preset granularity in the to-be-analyzed image; and
determining (S201) the image layout information according to the coordinate positions.

3. The method according to claim 2, wherein the determining (S201) the image elements with the preset granularity in the to-be-analyzed image comprises:
processing the to-be-analyzed image with image recognition according to the preset granularity, to obtain the image elements with the preset granularity in the to-be-analyzed image.

4. The method according to claim 3, wherein the determining (S201) the coordinate positions of the image elements with the preset granularity in the to-be-analyzed image comprises:
processing the to-be-analyzed image with image segmentation according to the image elements with the preset granularity to obtain a plurality of image blocks, wherein one image block represents one image element with the preset granularity; and
determining coordinate positions of the image blocks in the to-be-analyzed image.

5. The method according to any one of claims 1 to 4, wherein the at least two types of modal data comprise a text modality and a visual modality; and the determining (S 102) the image layout information and the image content information of the to-be-analyzed image comprises:
processing (S202) the to-be-analyzed image with text extraction of the text modality to obtain first content information corresponding to the text modality; and
converting (S202) a content expressed by the visual modality in the to-be-analyzed image into a text described by a natural language, to obtain second content information corresponding to the visual modality;
wherein the image content information comprises the first content information and the second content information.

6. The method according to claim 5, wherein the determining (S103) the response information corresponding to the question information according to the image layout information and the image content information comprises:
determining (S402) an image category of the to-be-analyzed image according to the image layout information and the image content information;
determining (S403) semantic information of the question information, and extracting target information corresponding to the semantic information from the image layout information and the image content information; and
determining (S404) the response information according to the target information and the image category of the to-be-analyzed image.

7. The method according to claim 6, wherein the determining (S404) the response information according to the target information and the image category of the to-be-analyzed image comprises:
determining an information format corresponding to the image category of the to-be-analyzed image according to a preset association relationship between the image category and the information format; and
generating the response information corresponding to the question information according to the target information, based on the information format corresponding to the image category of the to-be-analyzed image.

8. The method according to claim 6, wherein the determining (S402) the image category of the to-be-analyzed image according to the image layout information and the image content information comprises:
determining similarities between two of the image layout information, and the first content information and the second content information; and
determining, in response to the similarities all being equal to or larger than a preset similarity threshold, the image category of the to-be-analyzed image according to the image layout information and the image content information.

9. The method according to claim 8, further comprising:
determining, in response to the similarities being smaller than the preset similarity threshold, standard information from the image layout information, the first content information and the second content information, wherein the standard information is used for adjusting at least one of the image layout information and the image content information;
determining adjusted image layout information and image content information according to the standard information; and
determining the image category of the to-be-analyzed image according to the adjusted image layout information and image content information.

10. The method according to claim 6, wherein the determining (S402) the image category of the to-be-analyzed image according to the image layout information and the image content information comprises:
determining, according to the image layout information, a position arrangement rule of the image elements with the preset granularity in the to-be-analyzed image, wherein the position arrangement rule represents an arrangement rule of the coordinate positions of the image elements with the preset granularity in the to-be-analyzed image;
determining, according to the position arrangement rule, the image category of the to-be-analyzed image as a first image category;
determining, according to the second content information, the image category of the to-be-analyzed image as a second image category; and
obtaining the image category of the to-be-analyzed image in response to the first image category being consistent with the second image category.

11. The method according to claim 10, further comprising:
determining, in response to inconsistency between the first image category and the second image category, a target category from the first image category and the second image category according to a preset priority, as the image category of the to-be-analyzed image.

12. An image based human-computer interaction apparatus (600), comprising:
an acquiring unit (601), configured to acquire a to-be-analyzed image, wherein the to-be-analyzed image comprises at least two types of modal data;
a first determining unit (602), configured to determine image layout information and image content information of the to-be-analyzed image, wherein the image layout information represents distribution of image elements with preset granularity in the to-be-analyzed image, and the image content information represents a content expressed by the modal data in the to-be-analyzed image; and
a second determining unit (603), configured to determine, in response to acquiring question information, response information corresponding to the question information according to the image layout information and the image content information, wherein the question information represents a question proposed for the to-be-analyzed image; and the response information represents a reply answer corresponding to the question information.

13. An electronic device (800), comprising:
at least one processor (802); and
a memory (801) communicatively connected to the at least one processor (802), wherein
the memory (801) stores instructions executable by the at least one processor (802); and the instructions are executed by the at least one processor (802) to cause the at least one processor (802) to perform the method according to any one of claims 1 to 11.

14. A non-transitory computer-readable storage medium storing computer instructions, wherein the computer instructions are used for causing a computer to perform the method according to any one of claims 1 to 11.

15. A computer program product, comprising a computer program, wherein when the computer program is executed by a processor, the steps of the method according to any one of claims 1 to 11 are implemented.
